Europäisches Patentamt

European Patent Office

Office européen des brevets

(11) Veröffentlichungsnummer : **0 018 544**
**B1**

(12)

# EUROPÄISCHE PATENTSCHRIFT

(45) Veröffentlichungstag der Patentschrift :
09.03.83

(21) Anmeldenummer : 80102051.2

(22) Anmeldetag : 16.04.80

(51) Int. Cl.³ : **B 65 D 51/14, B 65 D 39/16,
F 16 J 13/12**

(54) **Verschlussdeckel.**

(30) Priorität : 27.04.79 DE 2917150

(43) Veröffentlichungstag der Anmeldung :
12.11.80 Patentblatt 80/23

(45) Bekanntmachung des Hinweises auf die Patenterteilung : 09.03.83 Patentblatt 83/10

(84) Benannte Vertragsstaaten :
AT DE FR GB SE

(56) Entgegenhaltungen :
DE A 2 632 175
DE A 2 719 014
DE U 7 125 810

(73) Patentinhaber : **Blau KG Fabrik für Kraftfahrzeugteile
Schneiderstrasse 13-17 Postfach 2024
D-4018 Langenfeld (DE)**

(72) Erfinder : **Scharrer, Konrad
Ulrich-v-Hassel-Strasse 12
D-4019 Monheim (DE)**

(74) Vertreter : **Patentanwälte Schaumburg,
Schulz-Dörlam & Thoenes
Mauerkircherstrasse 31
D-8000 München 80 (DE)**

Verschlußdeckel

Die Erfindung bezieht sich auf einen Verschlußdeckel nach dem Oberbegriff des Anspruchs 1.

Ein derartiger Verschlußdeckel ist bekannt (DE-A-26 32 175). Hierbei hat der Griff die Gestalt einer aus Vollmaterial bestehenden, in ihrer Mitte schmaleren und zu ihren beiden Enden hin breiter werdenden Wandung, und seine Länge ist merklich geringer als der Innendurchmesser der deckelseitigen Dichtfläche, die von einem rückseitigen Rand des äußeren Deckelteils gebildet ist, so daß ihr Außendurchmesser dem Außendurchmesser des äußeren Deckelteils gleicht. Die gegenüber dem Durchmesser des äußeren Deckelteils geringere Länge des Griffes des bekannten Verschlußdeckels ist jedoch hinsichtlich der Handhabung ungünstig, insbesondere wenn beispielsweise im Falle eines Ölverschlußdeckels an einem Kraftfahrzeugmotor dessen Durchmesser merklich geringer als die Abmessungen einer menschlichen Hand sind. Es wäre jedoch bei dem bekannten Verschlußdeckel nicht ohne weiteres möglich, den Griff so lang auszubilden, daß seine Länge annähernd dem Durchmesser des äußeren Deckelteils gleicht. Der Griff würde nämlich dann den Bereich der deckelseitigen Dichtfläche überlappen, und diese Überlappung würde bei der Herstellung des Verschlußdeckels bewirken, daß sich die Dichtfläche in ihren dem Griff axial gegenüberliegenden Abschnitten beim Erkalten des gegossenen Verschlußdeckels verformte, da praktisch jedes zur Verfügung stehende Kunststoffmaterial beim Erkalten nach dem Gießen — wenn auch geringen — Dimensionsänderungen unterworfen ist. Damit wäre die für eine verläßliche Abdichtung erforderliche Ebenheit der deckelseitigen Dichtfläche nicht gewährleistet. Selbst wenn aber diese Ebenheit durch Verwendung besonders hochwertiger Materialien, durch den Einsatz besonders aufwendiger Gießverfahren und/oder durch eine aufwendige Nachbehandlung erreicht werden könnte, so ginge sie doch im Verlaufe der Gebrauchslebensdauer des Verschlußdeckels wieder verloren. Die auf ihn einwirkenden Druck- und Temperaturschwankungen würden nämlich wiederum in den dem Griff axial benachbarten Abschnitten der deckelseitigen Dichtfläche zu Formänderungen führen, da verfügbare Kunststoffe bei derartigen Einwirkungen keine völlige Formkonstanz zeigen. Diese Nachteile wären in besonderem Maße beim Einsatz unter erschwerten Bedingungen hinsichtlich Druck- und Temperaturänderungen zu befürchten, wie dies beispielsweise in Kraftfahrzeugen der Fall ist, wo zum Verschließen von Ölstutzen verwendete Verschlußdeckel aufgrund der Motorerwärmung häufigen starken Temperaturwechseln ausgesetzt sind.

Bei einem weiteren bekannten Verschlußdeckel (DE-U-71 25 810) besteht der äußere Deckelteil aus Metallblech, und der Griff ist an ihm so ausgebildet, daß er einen U-förmigen Bügel umfaßt, dessen Schenkel in die annähernd ebene Außenseite des äußeren Deckelteils übergehen und an ihren Enden einen dem Durchmesser des äußeren Deckelteils gleichen Außenabstand haben. Der als Gießteil hergestellte innere Formteil hat dabei die Form eines Napfes mit einem ringförmigen, dem äußeren Deckelteil benachbarten Flansch, auf dessen Außenumfang der äußere Deckelteil befestigt ist und an dessen Rückseite die deckelseitige Dichtfläche gebildet ist. Die beiden Schenkel des Bügels erweitern sich zu ihren in die Außenseite des äußeren Deckelteils übergehenden Enden hin stark, so daß ihre Verbindungsstellen mit dem äußeren Deckelteil in einem radialen Bereich liegen, der der deckelseitigen Dichtfläche axial benachbart ist. Der zweiteilige Aufbau des Verschlußdeckels bedingt hierbei einen großen Herstellungsaufwand. Eine einstückige Ausbildung wäre nicht ohne weiteres möglich, da dann die der deckelseitigen Dichtfläche axial gegenüberliegenden Enden der Schenkel des Griffbügels bei der Herstellung oder bei Druck- und Temperaturschwankungen während des Gebrauches zu Verformungen der deckelseitigen Dichtfläche führen würden, ähnlich wie dies vorstehend erläutert wurde.

Es ist weiter ein Verschlußdeckel bekannt (DE-U-19 39 413), der einen äußeren Deckelteil, einen von diesen in die zu verschließende Öffnung hineinragenden, mit einer umlaufenden Dichtlippe versehenen inneren Deckelteil und einen auf der Außenseite des äußeren Deckelteils vorgesehenen, zapfenförmigen Ansatz zum Herausziehen des Verschlußdeckels aus einem verschlossenen Rohrstutzen umfaßt. Hierbei sind der äußere Deckelteil und der innere Deckelteil einstückig gebildet, und auf der Rückseite des äußeren Deckelteils radial außerhalb des inneren Deckelteils ist eine ringförmige Anlagefläche gebildet, mit der der Verschlußdeckel am freien Ende des zu verschließenden Rohrstutzens zur Anlage kommt. Der zapfenförmige Ansatz auf der Außenseite des äußeren Deckelteils liegt exzentrisch zu dessen Mitte, jedoch radial innerhalb desjenigen Ringbereichs, in dem auf der Rückseite des äußeren Deckelteils die genannte Anlagefläche gebildet ist. Ein gegenüber dem genannten zapfenförmigen Ansatz größerer, sich über die Außenseite des äußeren Deckelteils erstreckender Griff ist bei dem bekannten Verschlußdeckel deshalb nicht erforderlich, weil dieser keine Verbindungsmittel aufweist, die mit am Innenumfang der Rohrstutzenöffnung vorgesehenen weiteren Verbindungsmitteln zusammenwirken und ein Drehen des Verschlußdeckels erfordern.

Es sind auch Verschlußdeckel bekannt, die insbesondere zum Verschließen von Behältern oder Rohrstutzen in einem Kraftfahrzeug verwendbar sind und die mit Verbindungsmitteln versehen sind, die mit am Innenumfang der Öffnung vorgesehenen weiteren Verbindungsmitteln zusammenwirken und ein Drehen des Deckels erfordern (FR-A-15 15 873, DE-U-19 09 257), wobei äußerer Deckelteil und innerer Deckelteil einstückig mit an der Rückseite des äußeren Deckelteils liegender deckelseitiger Dichtfläche gebildet sind. Hierbei ist jedoch kein sich über den äußeren Deckelteil erstreckender Griff vorgesehen, sondern der äußere Deckelteil ist als eine von Hand zu erfassende und zu drehende Kappe ausgebildet. Bei vielen Anwendungsfällen steht jedoch radial außerhalb des Verschlußdeckels kein genügend großer Raum zur Verfügung, um den Verschlußdeckel von Hand umfassen und drehen zu können.

Der Erfindung liegt die Aufgabe zugrunde, einen einstückig aus Kunststoff gebildeten Verschlußdeckel der eingangs genannten Art derart weiterzubilden, daß sein Griff eine annähernd dem Durchmesser des äußeren Deckelteils gleiche Länge aufweist, so daß eine leichte Handhabung mittels des Griffes möglich ist, und daß trotzdem bei der Herstellung und während einer langen Gebrauchslebensdauer praktisch keine Beeinträchtigung der Formkonstanz der deckelseitigen Dichtfläche auftritt.

Die Aufgabe wird gemäß der Erfindung bei einem Verschlußdeckel der eingangs genannten Art durch die im Kennzeichenteil des Anspruchs 1 angegebenen Merkmale gelöst.

Bei dem Verschlußdeckel gemäß der Erfindung greift der als Teil des Griffes vorgesehene, U-förmige Bügel mit seinen Schenkeln am äußeren Deckelteil radial außerhalb des Bereichs der deckelseitigen Dichtfläche an, so daß vom Bügel auf den äußeren Deckelteil übertragene Kräfte, wie sie nach einem Gießvorgang und im Betrieb auftreten, nur auf den Außenrand des äußeren Deckelteils einwirken, ohne die Formkonstanz der deckelseitigen Dichtungsfläche zu beeinträchtigen. Durch die Bügelform des sich zumindest annähernd bis zum Außenumfang des äußeren Deckelteils erstreckenden Griffes wird eine ergonomisch günstige Gestaltung erreicht.

Die Erfindung wird im folgenden anhand der Zeichnungen erläutert, in denen ein Ausführungsbeispiel dargestellt ist. Es zeigen

Figur 1 in Seitenansicht einen Verschlußdeckel gemäß der Erfindung ;

Figur 2 einen Längsschnitt durch den Verschlußdeckel entlang der Linien II-II in Figur 1.

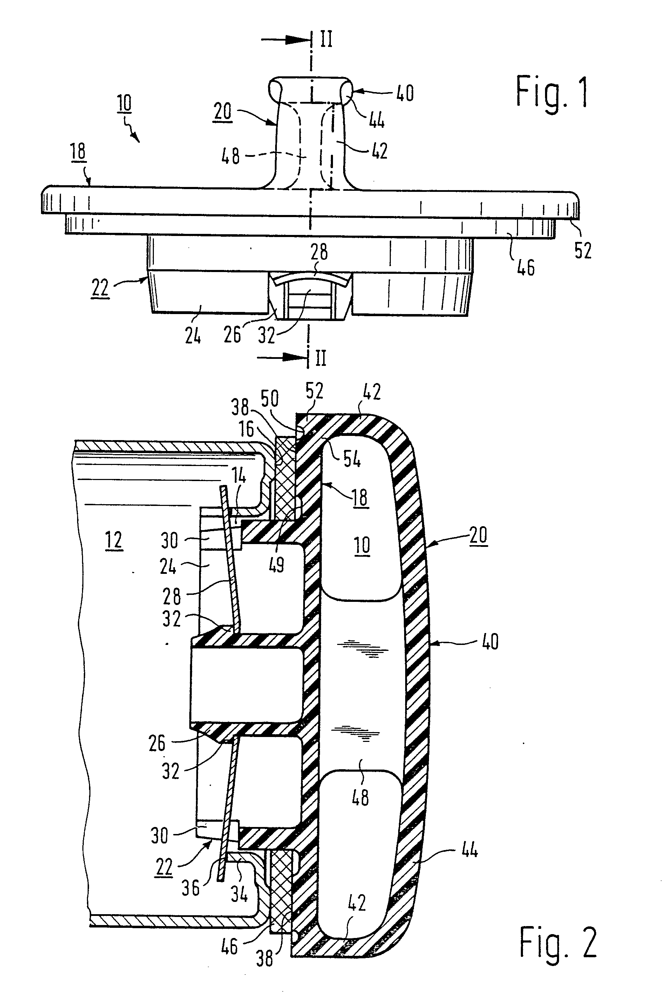

Der in den Figuren dargestellte Verschlußdeckel 10 dient zum Verschließen des Öleinfüllstutzens 12 eines Kraftfahrzeugs, der an seinem freien Ende umgebördelt ist und eine die so gebildete Öffnung 14 kreisringförmig umgebende, ortsfeste Dichtfläche 16 aufweist. Der Verschlußdeckel weist einen die Öffnung 14 und die ortsfeste Dichtfläche 16 überdeckenden äußeren Deckelteil 18, einen an dessen Außenseite einstückig befestigten Griff 20 und einen von dem äußeren Deckelteil 18 in die Öffnung 14 hineinragenden inneren Deckelteil 22 auf. Der innere Deckelteil 22 ist beim Ausführungsbeispiel gebildet von einer im wesentlichen hohlzylindrischen Wandung 24 und einem innerhalb von dieser liegenden, sich axial vom äußeren Deckelteil 18 fort erstreckenden, hohlen Zapfen 26. Der Außendurchmesser der Wandung 24 entspricht annähernd dem Innendurchmesser der Öffnung 14, und zu ihrem rückwärtigen Ende hin ist die Wandung 24 auf ihrer Außenseite abgeschrägt, so daß sie zur Führung des Verschlußdeckels 10 beim Aufsetzen auf das Ende des Öleinfüllstutzens 12 dient. Der Zapfen 26 durchsetzt eine Blattfeder 28, die mit ihren zum äußeren Deckelteil 18 hin konvex gewölbten Enden beiderseits aus Ausnehmungen 30 der Wandung 24 über deren Außendurchmesser hervorsteht, und mittels am Zapfen 26 gebildeter Rastanschläge 32 ist die Blattfeder 28 bei nicht festgezogenem Verschlußdeckel 10 (Figur 1) gegen den Grund der Ausnehmungen 30 vorgespannt und somit gegen eine axiale Verschiebung vom äußeren Deckelteil 18 fort gehalten. Auf der Seite der Öffnung 14 wirkt die Blattfeder 28 mit einer an der Umbördelung 34 des Öleinfüllstutzens 12 gebildeten Kurvenführung 36 derart zusammen, daß hierdurch ein Renkverschluß gebildet ist.

An der dem Öleinfüllstutzen 12 zugewandten Rückseite des äußeren Deckelteils 18 ist eine der ortsfesten Dichtfläche 16 gegenüberliegende, kreisringförmige deckelseitige Dichtfläche 38 gebildet, die eine möglichst ebene Oberfläche hat. Zur Vermeidung von Verwindungen ist die radiale Breite der deckelseitigen Dichtfläche 38 größer als die relativ geringe radiale Breite der ortsfesten Dichtfläche 16 gewählt.

Der Griff 20 umfaßt einen U-förmigen Bügel 40, der sich diametral über die Außenseite des äußeren Deckelteils 18 erstreckt und dessen Außenabmessung dem Außendurchmesser des äußeren Deckelteils 18 gleicht. Der Bügel 40 besteht aus zwei Schenkeln 42 von untereinander gleichen Abmessungen sowie einem die Schenkel 42 verbindenden Mittelteil 44. Die axiale oder senkrecht zum äußeren Deckelteil 18 gemessene Höhe des Mittelteils 44 und damit des gesamten Griffes 40 ist mehrfach kleiner als der Außendurchmesser des äußeren Deckelteils 18. Die beiden Schenkel 42 sind an ihren dem äußeren Deckelteil 18 benachbarten Enden mit letzterem verbunden. Die Verbindungsstellen liegen radial außerhalb desjenigen auf der Außenseite des äußeren Deckelteils 18 freigelassenen Ringbereichs, in dem auf der Rückseite des äußeren Deckelteils 18 die deckelseitige Dichtfläche 38 gebildet ist, da die beiden Schenkel 42 einen gegenseitigen Innenabstand haben, der dem Außendurchmesser der deckelseitigen Dichtfläche 38 gleicht. Hierdurch werden von den Schenkeln 42 auf den äußeren Deckelteil 18 übertragene, verformende Kraftwirkungen im Bereich der deckelseitigen Dichtfläche 38 praktisch nicht wirksam.

Auf der deckelseitigen Dichtfläche 38 liegt ein Dichtring 46, der beim Aufsetzen des Verschlußdeckels 10 auf das freie Ende des Öleinfüllstutzens 12 gegen die ortsfeste Dichtfläche 16 zur Anlage kommt und zwischen beiden Dichtflächen 16, 38 eingeklemmt wird. Obwohl auch eine Abdichtung allein durch Aufeinanderliegen der Dichtflächen 16, 38 denkbar wäre, wird hierdurch die Dichtwirkung noch weiter verbessert, und weiter werden durch den Dichtring 46 sich etwa noch ergebende, geringe Formabweichungen der ortsfesten Dichtfläche 38 von einer genau ebenen Form vom Dichtring 46 ausgeglichen. Auch etwaige Gestaltunregelmäßigkeiten der ortsfesten Dichtfläche 16 werden vom Dichtring 46 aufgenommen. Zur Halterung des Dichtrings 46 bei abgenommenem Verschlußdeckel 10 liegt der Dichtring 46 mit seinem Innenumfang auf der Außenseite der Wandung 24 unter geringer Vorspannung reibschlüssig an.

In der Rückseite des äußeren Deckelteils 18 ist eine die Wandung 24 des inneren Deckelteils 22 umgebende und sich radial bis zum Innenumfang der deckelseitigen Dichtfläche 38 erstreckende, gegenüber der deckelseitigen Dichtfläche 38 zurückspringende Umfangsnut 48 gebildet. In diese hinein kann der Dichtring mit seinem aufgrund der Vorspannung geringfügig verdickten Innenumfang ausweichen. Besonders wichtig ist diese Ausweichmöglichkeit darüberhinaus deswegen, weil praktisch alle Dichtungsmaterialien unter dem Einfluß der abzudichtenden Flüssigkeit quellen und weil insbesondere das abzudichtende Öl zu einer entsprechenden Verdickung des Dichtrings 46 führt. Schließlich bewirkt die Nut 48 auch eine Verringerung der Dicke des auf seiner Außenseite ebenen äußeren Deckelteils 18 gegenüber demjenigen Ringbereich, in dem die deckelseitige Dichtfläche 38 liegt, wodurch von der Blattfeder 28 im Ruhezustand über die Wandung 24 auf den äußeren Deckelteil 18 ausgeübte Kräfte weniger leicht zu einer Formveränderung der deckelseitigen Dichtfläche 38 führen können, als dies ohne das Vorhandensein der Nut 48 der Fall wäre.

In der Rückseite des äußeren Deckelteils 18 ist weiter eine die deckelseitige Dichtfläche 38 umgebende, dieser gegenüber zurückspringende Umfangsnut 50 von gegenüber dem Außendurchmesser des äußeren Deckelteils 18 geringer radialer Weite vorgesehen, die von einem sich nach rückwärts erstreckenden Rand 52 des äußeren Deckelteils 18 umgeben ist. Durch diese Umfangsnut, die zweckmäßig zur Vermeidung von Kerbspannungen wie beim Ausführungsbeispiel einen halbkreisförmigen Querschnitt aufweist, wird im äußeren Deckelteil 18 eine den Ringbereich der deckelseitigen Dichtfläche 38 umgebender, schmaler Ringbereich 54 geschaffen, dessen Dicke gegenüber dem Bereich der ortsfesten Dichtfläche 38 vermindert ist und der somit vom Griff 40 her bewirkte Verbiegungen aufnehmen kann, ohne daß diese die Formkonstanz der ortsfesten Dichtfläche 38 beeinträchtigen. Damit andererseits auch der den schmalen Ringbereich 54 überragende restliche Randbereich des äußeren Deckelteils 18 keinen starken Verformungen und insbesondere Verwindungen unterworfen ist, ist der äußere Deckelteil 18 durch den Rand 52 verstärkt. Der Rand 52 kann sich wie beim Ausführungsbeispiel nach rückwärts bis zur Ebene der deckelseitigen Dichtfläche 38 erstrecken. Zur Vergrößerung der Versteifungswirkung ist es ebenfalls möglich, den Rand 52 noch weiter nach hinten ragen zu lassen, beispielsweise bis zur Ebene der der ortsfesten Dichtfläche 16 zugewandten Rückseite des Dichtrings 46.

Die Schenkel 42 des im wesentlichen den Griff 20 bildenden Bügels 40 treffen zweckmäßig zumindest anhand senkrecht und beim Ausführungsbeispiel genau senkrecht auf den äußeren Deckelteil 18 auf. Hierdurch wird bei einer Ausbiegung der Schenkel 42 im wesentlichen nur der der Umfangsnut 50 benachbarte schmale Ringbereich 54 durch Biegung verformt, während beispielsweise bei einem zum äußeren Deckelteil 18 schrägen Verlauf der Schenkel 42 ein größerer Querschnittsbereich des äußeren Deckels 18 von den Verformungen erfaßt würde, wodurch diese auch auf die deckelseitige Dichtfläche 38 übergreifen könnten, sofern nicht ein mit höherem Materialaufwand verbundener und oft aus Platzgründen unzulässiger größerer Außendurchmesser des äußeren Deckelteils 18 gewählt würde. Daneben ist der zum äußeren Deckelteil 18 senkrechte Verlauf der Schenkel 42 in ergonomischer Hinsicht günstig, da hierdurch der Griff 20 noch sehr weit außen am Übergang zwischen den Schenkeln 42 und dem Mittelteil 44 ergriffen werden kann.

Wie aus einem Vergleich von Figur 1 und Figur 2 erkennbar ist, hat der Bügel 40 einen annähernd rechteckigen oder langrunden Vollquerschnitt mit gegenüber der Dicke mehrfach, zweckmäßig 3- bis 4-fach größerer Breite ; beim Ausführungsbeispiel beträgt die Breite im Bereich der Schenkel 42 annähernd das 3,2-Fache der größten Dicke. Die Breitseiten des Querschnitts liegen dabei im Bereich der Schenkel 42 annähernd tangential zum Umfang des äußeren Deckelteils 18 und im Bereich des Mittelteils 44 des Bügels 40 parallel zum äußeren Deckelteil 18. Hierdurch brauchen die Außenabmessungen des Bügels 20 und damit der Außendurchmesser des äußeren Deckelteils 18 nur geringfügig größer als der Außendurchmesser der deckelseitigen Dichtfläche 38 gewählt zu werden, um trotzdem zu erreichen, daß der Innenabstand der Schenkel 42 mindestens so groß ist wie der Außendurchmesser der deckelseitigen Dichtfläche 38. Die letztgenannte Bedingung wird also mit geringem Materialaufwand und einer geringen Baugröße verwirklicht. Die geringe Baugröße, auf die auch bereits oben im Zusammenhang mit anderen Maßnahmen hingewiesen wurde, ist in vielen Anwendungsfällen von besonderem Gewicht, beispielsweise bei den beengten Platzverhältnissen in Kraftfahrzeugen und insbesondere in deren Motorraum.

Durch die erläuterte Querschnittsform des Bügels 44 ist dieser andererseits gegen auf seinen Mittelteil einwirkende axiale Kräfte empfindlich, da er dann leicht auf den äußeren Deckelteil 18 hin oder von diesem fort durchgebogen werden kann, was zu Verschwenkungen der Schenkel 42 um ihre Befestigungsstellen am äußeren Deckelteil 18 führt. Obgleich solche Schwenkbewegungen, wie oben erläutert, durch die vorhandene Umfangsnut 50 und den ihr benachbarten schmalen Ringbereich 54 aufgefangen werden, könnten größere derartige Verformungen doch zu einer Beeinträchtigung der Formkonstanz der deckelseitigen Dichtfläche 38 führen, weshalb es zweckmäßig ist, die genannten Durchbiegungen zu vermeiden. Den Durchbiegungen entgegengewirkt wird bereits dadurch, daß der Mittelteil 44 des Bügels 40 eine schwach vom äußeren Deckelteil 18 fort gewölbte Form hat und gerundet in die Schenkel 42 übergeht, wodurch der gebildete Bogen relativ formsteif ist. Diese Maßnahme ist auch aus weiteren, noch zu erläuternden Gründen besonders zweckmäßig. Als weiteres und besonders wirksames Mittel zur Verhinderung von Durchbiegungen des Mittelteils 44 ist jedoch weiter vorgesehen, daß der Griff 20 eine den Mittelteil 44 des Bügels 40 mit dem innerhalb der deckelseitigen Dichtfläche 38 liegenden Bereich der Außenseite des äußeren Deckelteils 18 verbindende Stütze aufweist. Hierdurch sind Mittelteil 44 und äußerer Deckelteil 18 in festem Abstand voneinander gehalten, wodurch Durchbiegungen des Mittelteils 44 nur unter gleichzeitiger Durchbiegung des inneren Bereichs des äußeren Deckelteils 18 erfolgen können und dadurch weitgehend unmöglich sind.

Beim Ausführungsbeispiel ist die genannte Stütze als eine in der Seitenansicht der Figur 2 annähernd rechteckige, in der Draufsicht auf die Außenseite des Deckels 10 und in der Seitenansicht nach Figur 1 unterhalb der Mittellinie des Mittelteils 44 des Bügels 40 liegende Wandung 48 ausgebildet, deren in Längsrichtung des Bügels 40 gemessene Länge geringer als der Innendurchmesser der deckelseitigen Dichtfläche 38 ist. Da die von der Wandung 48 aufzunehmenden und sie gegebenenfalls auf Knickung beanspruchenden Kräfte nicht allzu hoch sind, kann wie beim Ausführungsbeispiel vorteilhafterweise die Dicke der Wandung 48 geringer gewählt werden als die Breite des Bügels 40. Dies ist auch in ergonomischer Hinsicht vorteilhaft, weil so der Bügel 40 auch in seinem mit der Wandung 48 verbundenen Abschnitt als von außen her hintergreifbare Leiste erhalten bleibt und die Wandung 48 sogar ein besonders sicheres Ergreifen des Bügels 44 deshalb gestattet, weil sie ein Abrutschen der Fingerkuppen unter dem Bügel 40 hindurch verhindert. Diese vorteilhaften Wirkungen werden weiter noch dadurch verstärkt, daß die Breite des Mittelteils 44 des Bügels 40 in dessen Abschnitt, auf dem er mit der Wandung 48 verbunden ist, um annähernd die Dicke dieser Wandung 48 größer ist als die Breite der Schenkel 42 und daß sich die Breite des Mittelteils 44 ausgehend von diesem Abschnitt zu den Schenkeln 42 hin kontinuierlich verringert; die größte Breite des Mittelteils 44 im Vergleich zur Breite der Schenkel 42 ist in Figur 1 deutlich erkennbar. Wie andererseits aus Figur 2 zu ersehen ist, ist die in Längsrichtung des Bügels 40 gemessene Länge der Wandung 48 größer als ihre zwischen dem Bügel 40 und der Außenseite des äußeren Deckelteils 18 liegende Höhe und auch größer als der halbe Innendurchmesser der deckelseitigen Dichtfläche 38. Durch diese relativ große Länge können vom Mittelteil 44 des Bügels 40 her einwirkende, die Wandung 48 auf Knickung beanspruchende Kräfte besonders gut aufgenommen werden, wodurch wiederum die gewünschte geringe Dicke der Wandung 48 gefördert wird.

Nicht nur im Bereich der Umfangsnut 48, sondern in seinem gesamten innerhalb des Ringbereichs der deckelseitigen Dichtfläche 38 liegenden mittleren Bereich weist der äußere Deckelteil 18 eine geringere Dicke als im Bereich der deckelseitigen Dichtfläche 38 auf. Hierdurch bleiben etwaige Verformungen des äußeren Deckelteils 18, wie sie beispielsweise vom Mittelteil 44 des Bügels 40 über die Wandung 48 übertragen werden können, auf den Mittelteil des äußeren Deckelteils 18 beschränkt, ohne die Formkonstanz der dekkelseitigen Dichtfläche 38 wesentlich zu beeinflussen. Weiter hat die relativ geringe Dicke des Mittelteils des äußeren Deckelteils 18 die Wirkung, daß die bei festgezogenem Verschlußdeckel 10 vom Renkverschluß herrührenden, hohen Zugkräfte, die der Zapfen 26 auf den äußeren Deckelteil 18 ausübt, nicht allein von diesem, sondern über die Stütze auch vom Bügel 44 aufgefangen werden. Auch in diesem Zusammenhang ist die Bogenform des Bügels 44 zur Aufnahme der genannten Kräfte günstig.

Andere, nicht beschriebene Ausgestaltungen der Erfindung in Abweichung vom dargestellten Ausführungsbeispiel sind selbstverständlich möglich. Beispielsweise können anstelle des Renkverschlusses auch andere am Innenteil 22 vorgesehene Verschlußmittel verwendet werden, die mit geeigneten weiteren öffnungsseitigen Verschlußmitteln zusammenwirken, insbesondere ein Außengewinde und ein Innengewinde.

## Ansprüche

1. Verschlußdeckel aus Kunststoff für die von einer kreisringförmigen Dichtfläche (16) umgebene Öffnung (14) eines Behälters oder des freien Endes eines Rohrstutzens (12), mit einem die Öffnung (14) und die zu ihr ortsfeste Dichtfläche (16) überdeckenden äußeren Deckelteil (18), mit einem mit dem äußeren Deckelteil (18) einstückig verbundenen und von ihm in die Öffnung (14) hineinragenden inneren Deckelteil (22), der mit Verbindungsmitteln (26) versehen ist, die mit am Innenumfang der Öffnung (14) vorgesehenen weiteren Verbindungsmitteln (36) zusammenwirken, mit einem am äußeren Deckelteil (18) einstückig angeformten, sich diametral über dessen Außenseite erstreckenden Griff (20) und mit einer an der Rückseite des äußeren Deckelteils (18) der ortsfesten Dichtfläche (16) gegenüberliegend gebildeten, kreisringförmigen deckelseitigen Dichtfläche (38), dadurch gekennzeichnet, daß der Außendurchmesser des äußeren Deckelteils (18) größer ist als der Außendurchmesser der ortsfesten Dichtfläche (38), daß der Griff (20) einen aus Vollmaterial bestehenden, U-förmigen Bügel (40) umfaßt, dessen Schenkel (42) an ihren mit dem äußeren Deckelteil (18) verbundenen Enden einen dem Außendurchmesser der deckelseitigen Dichtfläche (38) gleichen oder diesem gegenüber geringfügig größeren gegenseitigen Innenabstand haben, und daß der Griff (20) eine sich entlang der Mittelebene des Bügels (40) erstreckende, diesen mit dem äußeren Deckelteil verbindende Wandung (48) umfaßt, deren in Längsrichtung des Bügels (40) gemessene Länge geringer als der Innendurchmesser der deckelseitigen Dichtfläche (38) ist.

2. Verschlußdeckel nach Anspruch 1, dadurch gekennzeichnet, daß die Schenkel (42) des Bügels (40) zumindest annähernd senkrecht auf den äußeren Deckelteil (18) auftreffen.

3. Verschlußdeckel nach Anspruch 1 oder 2, dadurch gekennzeichnet, daß der Bügel (40) einen annähernd rechteckigen Querschnitt mit gegenüber der Dicke mehrfach größerer senkrecht zur Längserstreckung gemessener Breite aufweist.

4. Verschlußdeckel nach einem der Ansprüche 1 bis 3, dadurch gekennzeichnet, daß die Breite des Bügels (40) in dessen mittlerem Abschnitt, auf dem er mit der ihn mit dem äußeren Deckelteil (18) verbindenden Wandung (48) verbunden ist, um annähernd die Dicke dieser Wandung (48) größer ist als die Breite der Schenkel (42), wobei vorzugsweise seine Breite ausgehend von diesem mittleren Abschnitt zu den Schenkeln (42) hin abnimmt.

## Claims

1. Closure cap made of plastics material for the opening (14), surrounded by an annular sealing surface (16), of a container or of the free end of a tubular stub (12), having an outer cap part (18) overlapping the opening (14) and the sealing surface (16) stationary relative thereto, having an inner cap part (22) joined in one piece to the outer cap part (18) and projecting therefrom into the opening (14), the inner cap part being provided with connecting means (26) which cooperate with further connecting means (36) provided at the inner periphery of the opening (14), having a handle (20) formed in one piece on the outer cap part (18) and extending diametrically over its outside, and having an annular cap sealing surface (38) formed on the rear side of the outer cap part (18) opposite the stationary sealing surface (16), characterised in that the outer diameter of the outer cap part (18) is greater than the outer diameter of the stationary sealing surface (38), in that the handle (20) comprises a U-shaped strap (40) formed of solid material and whose side pieces (42) at their ends connected to the outer cap apart (18) have a mutual internal spacing which is the same as or slightly greater than the outer diameter of the cap sealing surface (38), and in that the handle (20) includes a wall (48) extending along the centre plane of the strap (40) and connecting this latter to the outer cap part, the length of which wall measured in the longitudinal direction of the strap (40) is less than the internal diameter of the cap sealing surface (38).

2. Closure cap according to Claim 1, characterised in that the side pieces (42) of the strap (40) meet the outer cap part (18) at least approximately perpendicularly.

3. Closure cap according to Claim 1 or 2, characterised in that the strap (40) is of approximately rectangular cross-section with a width several times greater than the thickness measured perpendicular to the longitudinal reach.

4. Closure cap according to one of Claims 1 to 3, characterised in that the width of the strap (40) in its central portion, at which it is connected to the wall (48) connecting it to the outer cap part (18), is greater than the breadth of the side pieces (42) by approximately the thickness of this wall (48), starting from this central portion its width preferably decreasing towards the side pieces (42).

## Revendications

1. Couvercle en matière plastique pour obturer l'ouverture (14) présentant une surface d'appui étanche circulaire (16) d'un récipient ou du bord libre d'une tubulure (12), comprenant une partie externe (18) qui couvre l'ouverture (14) et sa surface d'appui étanche (16) et une partie interne (22) faisant corps avec la partie externe (18) et entrant dans l'ouverture (14), cette partie interne (22) étant munie d'éléments de fixation (26) destinés à coopérer avec d'autres éléments de fixation (36) prévus à la périphérie intérieure de l'ouverture (14), une poignée (20) s'étendant diamétralement sur le côté extérieur de la partie externe (18) et faisant corps avec elle, tandis qu'une surface d'appui étanche (38) circulaire est prévue sur le côté intérieur du couvercle en regard de la surface d'appui étanche fixe (16), caractérisé en ce que le diamètre extérieur de la partie externe (18) est plus grand que le diamètre extérieur de la surface d'appui étanche (38), que la poignée (20) se développe en anse (40) à profil en U en matière pleine dont les branches (42) sont reliées par leurs extrémités à la partie externe (18) et sont espacées par une distance égale ou légèrement supérieure au diamètre extérieur de la surface d'appui étanche (38) du couvercle cependant que la poignée (20) contient une paroi (48) qui s'étend dans le plan médian longitudinal de l'anse (40) et qui relie celle-ci à la partie externe, cette paroi (48) ayant une longueur inférieure au diamètre intérieur de la surface d'appui étanche (38) du couvercle.

2. Couvercle selon la revendication 1 caractérisé en ce que les branches (42) de l'anse (40) s'étendent sensiblement perpendiculairement à la partie externe du couvercle.

3. Couvercle selon l'une quelconque des revendications 1, 2 caractérisé en ce que l'anse (40) a en section droite un profil approximativement rectangulaire dont la largeur en sens perpendiculaire à l'extension longitudinale est plusieurs fois supérieure à l'épaisseur.

4. Couvercle selon l'une quelconque des revendications 1 à 3 caractérisé en ce que dans son tronçon central où elle est reliée à la partie externe (18) par la paroi (48), l'anse (40) a une largeur qui est plus importante que la largeur des branches (42), et qui diminue à mesure qu'on se rapproche de ces dernières.

Fig. 1

Fig. 2